# EUROPEAN PATENT SPECIFICATION

(11) **EP 0 416 073 B1**
(45) Date of publication and mention of the grant of the patent: **08.11.1995**
(21) Application number: 90904795.3
(22) Date of filing: 19.03.1990
(51) Int. Cl.: B41F 33/00, B41F 9/04, G01B 13/22

(54) **Means for directly and effectively determining the hollow volume of a screen or the absolute and relative ink releasing factor of inking rollers, particularly for flexographic printing**
Mittel zum direkten und effektiven Bestimmen des Lochvolumens eines Rasters oder des absoluten und relativen Farbabgabefaktors von Farbwalzen, insbesondere für flexografischen Druck
Dispositif de détermination directe et efficace du volume creux d'une trame ou du facteur de libération d'encre absolu et relatif de rouleau encreur, destiné notamment à l'impression flexographique

(30) Priority: 17.03.1989 IT 8361389
(43) Date of publication of application: 13.03.1991
(73) Proprietor: SIMEC S.P.A., I-21057 Olgiate Olona (IT)
(72) Inventor: DELLA TORRE, Renato, I-21057 Olgiate Olona (IT); DELLA TORRE, Luigi, I-21057 Olgiate Olona (IT)
(74) Representative: Sassi, Romano
(86) International application number: EP9000451
(87) International publication number: WO9011188

(56) References cited:
- FR-A- 1 208 911
- FR-A- 2 412 066
- GB-A- 1 436 540
- GB-A- 2 204 396
- US-A- 2 270 505
- US-A- 4 346 588
- US-A- 4 628 728

## Description

The present invention relates, in general to process and means for directly and effectively determining,the hollow volume, of a screen, or of absolute and relative ink releasing factor of ink supplying rollers, particularly for Anilox rollers for flexographic printing. More particularly the present invention relates two ways for determining the inking potentiality of Anilox rollers for flexographic printing. One way is for determining the absolute hollow volume available to receive the ink. The second way is for determining the relative, the very relative, ink releasing factor.

At the present state of the art a method and apparatus are known (GB-A-2 204 396) for measuring image areas in order to determine the volumetric capacity per unit surface area of an engraved ink transfer roller. Are also known from US-A-4 346 588 a method and apparatus for determining the cell depth or condition of the surface of a printing, embossing or ink metering roll having a surface provided with recesses or cells. Still known from US-A-2 270 505 a device for measuring the volume of a chamber and particularly a irregular chamber , the volume of which cannot readily be calculated.

These documents disclose processes and apparatuses founded on the principle of providing the penetration of a fluid or the like of known quantity, into cavities under doctor level, of a screen and by determining at least the penetrated phase quantity wherein the penetrated phase quantity, is determined by difference, between the known phase quantity, preceding penetration and the phase quantity remained, at least after penetration, reference being made to position change of an interface or the like in a chamber having a constant cross section and displayed by a substantially transparent graduated ruler. However the problem of directly and effectively determining, the hollow volume, of a screen, or absolute and relative ink releasing factor of ink supplying rollers, particularly for flexographic printing was well far to be thoroughly solved.

It was usual for flexographic printers to know, by experience, that a certain screen, defined on the base of its number of lines, received in its large number of fine recesses a corresponding amount of ink quantity able to provide, on a determined colour, prepared by experience too and applied by a determined ink supplying system had a corresponding covering factor. This method had been successful as long as the ink supplying rollers had been scraped, by rubber rollers. Since such kind of scraping was obsolete, with evolution of flexographic printing and of the same generations of ink supplying rollers, or Anilox rollers, harder ink supplying rollers are scraped by relatively softer blades, but made of metal too and resistant to wear. With such kind of blade scraping, when used with ink supplying rollers of the third and fourth generation, the blades had a short life. More particularly, the mechanical ink supplying rollers, i.e. mechanically engraved, thus with mathematic definition pertaining to the third generation, missed their perfection upon application of a layer of chrome or the like, which partially filled the mesh recesses. Moreover the blades wore out the layer of chrome from the cell tops, thus reducing the capacity of cells, which in use, could be dirt with ink, impurities and muds including particles of chrome and blade resulting from wear. All these factors, affected the performances of ink supplying rollers, thus, even experience was not sufficient. Even worst was with Anilox rollers of the fourth generation, i.e. those having a screen laser engraved on a ceramic layer. The laser provides a multitude of craters, defined only in number and distribution, but having other important features which cannot be controlled. One of these features that cannot be controlled is the releasing factor, i.e. the actual capacity of transporting and releasing ink. Another complication was that while in ceramic ink supplying rollers the release of ink from the cells is substantially total, the release of ink from the cells of ink supplying rollers of preceding generations were partial and varying with the time of use.

This deficiency required a solution, also in view of the advancements made by flexographic printing which, from Cinderella of printing systems, is rapidly evolving as protagonist of first importance and seem to be destined to progress further. On the other hand nor the manufacturers of machines, nor the manufacturers of ink supplying rollers for same, nor the printers, could provide a standardization of the field without values and factors universally acknowledged, but a multitude of arbitrary data, resulting from casual and heterogeneous personal experiences and interpretations. Resulted thus a disqualification of the ink supplying rollers of the fourth generation, whose defect is that to be the most unknown for the results it is able to give and therefore that less of other complies with exigencies of who do not know it or of who believes to know it, with parameters borrowed by other generations of ink supplying rollers. In fact, since in the screen of other ink supplying rollers the shape and deepness were uniform and correlated, there were no problems in the choice of optimal combination: it was enough to indicate one of them, keeping in mind that a higher number of lines pick up and transports a corresponding lower amount of ink; whereas with ink supplying rollers of the fourth generation, it may be true the contrary: that rollers with a screen having a higher number of lines per square centimetre, picks up more ink than a screen having a lower number of lines per square centimetre, wherein the difference seems to be due to the deepness, rather than number of lines per square centimetre and the shape of cells. On the other hand, even a possible reference to deepness has absolute meaning, particularly in critical conditions, whereby, deepness increase, results in a thinning of the cell walls and in a collapse of the entire inking structure, so that it provides casual performances.
Indeed, at the present state of the art, tests were made by using small sample mesh rollers reproducing the most exactly possible the screen of ink supplying roller intended to be reproduced.

Of course such test was indirect, not contextual and improper as founded on two presuppositions which in practice do not occur. The first was that the small sample mesh roller appositely provided, was representative of the actual ink supplying roller intended to be tested, and even when this was the case the two rollers could be not be equally clean.

The second supposition was a perfect correspondence between the two rollers. Thus in no case could be a direct, actual and certainly representative of the performances of the ink supplying roller entirely or locally considered, in the time, in the place and in the actual conditions of wear, dirtiness and surface tension.

The invention as claimed is intended to remedy these drawbacks. The inventors referring to known principles of providing at least penetration of at least a fluid, of known quantity, into cell cavities under doctor level, of a screen and by determining at least the penetrated phase quantity and/or the penetrated phase quantity, transferred to a support. At least the penetrated phase quantity, is determined by difference, between the known phase quantity, preceding penetration and the phase quantity remained, at least after penetration or transferred to a support. It is measured in term gauged as position change of the surface, interface or the like of fluid, in a chamber having a constant cross section and is displayed by a substantially transparent graduated ruler. Or is obtained by indirect reading on an interface functionally floating, possibly through an amplifier, e.g. hydraulic and operating according to the principle of the hydraulic press and of Pascal or mechanic and operates according to the principle of the comparator used for high precision gauging. The fluid phase operates in a chamber having a constant cross section is a substantially incompressible liquid contained, at least adjacent to the interface with the screen of the ink supplying roller to be tested, provided by a very thin hyperplastic membrane. Alternately, the chamber having a constant cross section, is comprised by a substantially solid, hyperplastic tablet, or comprises an ink, having standard or known characteristics, with ingenious perception have conceived process and means for directly and effectively determining, the hollow volume, of a screen, or absolute and relative ink releasing factor of ink supplying rollers, particularly for flexographic printing.

In accordance with a preferred embodiment of the present invention, a section of screen of ink supplying roller, is fed with ink with blade or doctor scraping superfluous ink. Another device, mounted, say, in series, receives, on a paper or similar support the ink transferred, taking into account, the printed surface extension actually provided, the quantity of ink, really released and releasable by such ink supplying roller or at least by those sections of screen of ink supplying roller, substantially repeating the same task, performed by a printing machine, but providing, additionally, the input quantity of ink, as well as, a result in term of surface extension, obtained with real, effective of virtual measure of results obtainable by such ink supplying roller, e.g. when operating on any printing machine. In accordance with a preferred embodiment of the present invention, a device for ink detection, may be of limited width and each time displaced to provide several sample bands along the entire length of screen of the ink supplying roller. Of course, even in this case, the device may take simplified shapes and attitudes, manually operated too, for eventual testing, or complicated ones, for thorough testing, not by sampling, but general, involving the whole screen and a complete range of colours and/or inks.

The importance of this process resides in its power to check the testing results, by expressing them in standard units, which must be familiar to the four categories taking advantage of such process and means: the manufacturers of inks, the manufacturers of rolls, the manufacturers of inking systems, and the printers. Such amounts, represent real, effective, quantities of ink releasable from the inking ink supplying roller, per surface unit, e.g. per square centimetre, at parity of other standard and/or to be standardized conditions, but over all independent from the most important variable, comprised by the ink supplying roller kind generation, as well as by qualitative and dimensional fashion of the ink supplying roller to be tested.
The ways of carrying out the invention are described in detail below with reference to drawings which illustrate only specific embodiments, in which:
Figure 1 is the axial, vertical, cross-section of a device, for determining the absolute and relative releasing factor, of inking rollers, particularly for flexographic printing;
Figure 2 is a perspective front view, of the inking section of the device of Figure 1 in the attitude wherein the inking of a band upstream of the inking section took place;
Figure 3 is a perspective view, in a reduced scale, of a testing machine, driven by an electric motor, which substantially includes the device of Figure 1, but mounted within a unit, in order to operate, in narrow sections and/or over the entire ink supplying roller screen, from end to end and in order to provide both the measure of the volume of cell recesses, and the releasing factor of the ink, in conditions substantially equal to printing ones;
Figure 4 is a symbolic graph showing, in ordinates, the ink quantity, including two absorbing fields preceded by a settlement step;
Figure 5 is a perspective view of another very simplified manual device, but notwithstanding able to ascertain the volume of cell recesses comprised in a certain section of the ink supplying roller screen.

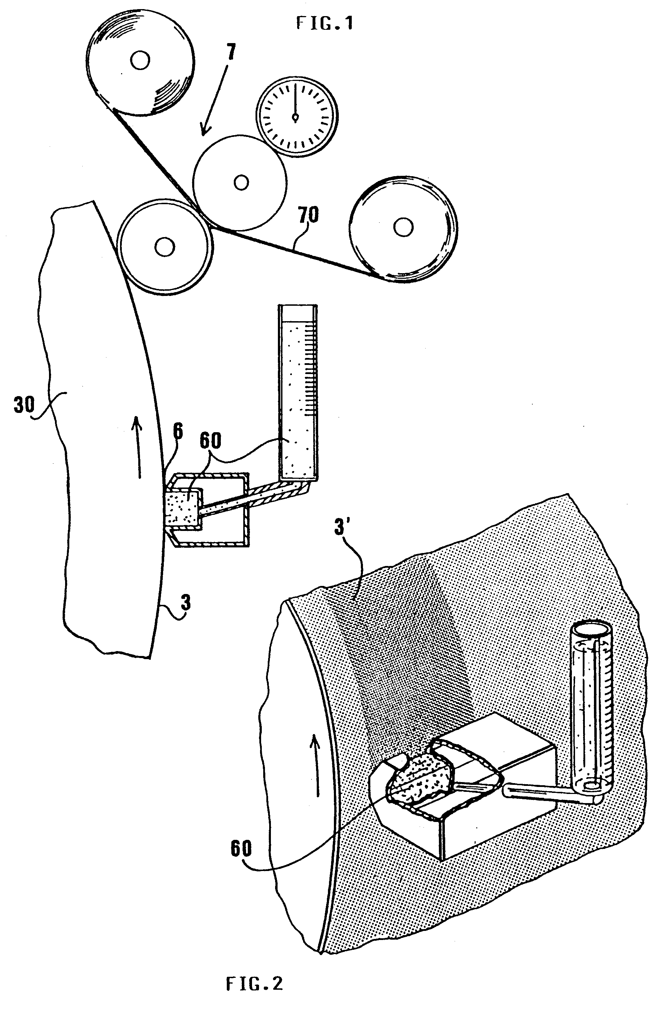

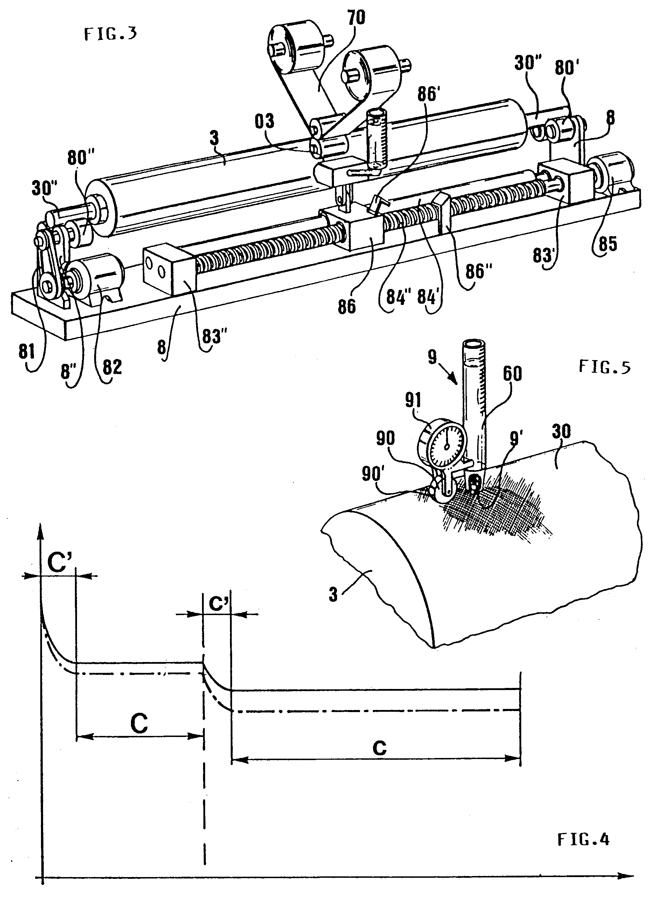

Referring now to figures 1, 2 and 3 of the drawings, in accordance with the present invention, a section 3' of screen 3 of ink supplying roller 30, is fed with ink 60, with blade or doctor 6, for scraping the superfluous ink 60. Another device 7, mounted, say, in series, receives, on a paper or similar support 70, the ink 60 transferred. Taking into account, the printed surface extension actually provided, the quantity of ink 60, really released and releasable by such ink supplying roller 3 or at least by those sections 3' of screen 3 of ink supplying roller 30, repeating substantially the same task, performed by a printing machine, but providing, additionally, input quantity of ink 60, as well as, a result in term of surface extension, obtained with real, effective of virtual measure of results obtainable by such ink supplying roller 3, e.g. when operating on any printing machine. In accordance with a preferred embodiment of the present invention, device 7 for ink detection, may be of limited width and each time displaced to provide several sample bands 03 along the entire length of screen 3 of the ink supplying roller. Of course, even in this case, the device may take simplified shapes and attitudes, manually operated too, for eventual testing, or complicated ones, for thorough testing, not by sampling, but general, involving the whole screen and a complete range of colours and/or inks. This is the case of Figure 3; in this figure, on a base 8, two end trestles 8' and 8'', hold two pairs 80' and 80'' of discs, on parallel axes, the forward thereof 80'' is driven by a belt 81, which, in turn, is driven by an electric motor 82. The disc pairs 80' and 80'' provide a kind of saddle, to receive the shafts 30' and 30'' of ink supplying roller 30. Just over the base 8, are mounted, on a pair of supports 83' and 83'', a pair of parallel guides, 84', 84'' one of which, 84'', is threaded and driven by motor 85. On parallel guides 84', 84'' is mounted the unit 86, which carries the device, substantially shown in figures 1 and 2 and substantially referenced with the same numbers, or characterized by the same operation. Moreover, the unit 86 includes an arm 86' for engaging and releasing a nut or comprising itself a nut. It cooperates with a stop 86'', which may be placed: downstream of the length of ink supplying roller 30, whose cell capacity is intended to be gauged; upstream of the length of ink supplying roller 30, whose ink releasing capacity is intended to be gauged or its capacity to transfer ink to the paper 70, which, in the first length, could be out of touch or even missing. Reference is now made to the graph of figure 4, showing, in ordinates, the ink quantity, including two absorbing fields, wherein field C relates to capacity of screen cells or absolute transport, while field c is related to ink releasing factor which is the real one occurring during printing. Field C and field c are preceded respectively by field C' and field c' of settlement or saturation.

Principles and examples described with reference to figures from 1 through 4 have as demonstrative symbol the device of figure 5 wherein a transparent and graduated pen 9 is provided with a bottom ball valve 9', normally closed, to keep ink 60 within the pen. Upon placing the pen with its bottom on screen 30 of ink supplying roller 3 the valve opens and the pen border adheres to the screen substantially providing a doctor able to distribute substantially on a band having the same width as the pen diameter, when the same is moved along the screen. Annexed to the pen 9 there is a wheel 90 with a circular calibrated circumference 90' engaging a meter 91. The ratio between ink consumed from the pen and the length realized may be expressed in terms of capacity of the cells of screen 30.

The importance of this process resides in its power to check the testing results, by expressing them in standard unities, which must be familiar to the four categories taking advantage of such process and means: the manufacturers of inks, the manufacturers of rolls, the manufacturers of inking systems, and the printers. Such figures, are the results of real, effective, quantities of ink releasable from the inking ink supplying roller 30, per unity of surface, e.g. per square centimetre, at parity of other standard and/or to be standardized conditions, but over all independent from the most important variable, comprised by the ink supplying roller kind, as well as by qualitative and dimensional fashion of the ink supplying roller to be tested.

## Claims

1. Means for directly and effectively determining, the relative ink releasing factor of inking rollers, particularly for flexographic printing, wherein by a first device a section (3') of screen (3) of ink supplying roller (30), is fed with ink (60), with blade or doctor (6), for scraping the superfluous ink (60), while another device (7), mounted, say, in series, receives, on a paper or similar support (70), the ink (60) transferred, accounting, the printed surface extension actually provided, the quantity of ink (60), really released and releasable by such ink supplying roller (3) or at least by those sections (3') of roller, repeating substantially the same task, performed by a printing machine.

2. Means, as claimed in claim 1, characterized by comprising a base (8), two end trestles (8' and 8''), hold two pairs (80' and 80'') of discs, on parallel axes, the forward thereof (80'') is driven by a belt (81), which, in turn, is driven by an electric motor (82), wherein said disc pairs (80' and 80'') provide a kind of saddle, to receive the shafts (30' and 30'') of ink supplying roller (30), just over said base (8), are mounted, on a pair of supports (83' and 83''), a pair of parallel guides, (84', 84'') one of which (84'') is threaded and driven by a motor (85), on parallel guides (84', 84'') is mounted the unit (86), which carries the first device, wherein the unit (86) includes an arm (86') for engaging and releasing a nut or comprising itself a nut, it cooperates with a stop (86''), which may be placed: downstream of the length of ink supplying roller (30), whose cell capacity is intended to be gauged, and upstream of the length of ink supplying roller (30), whose ink releasing capacity is intended to be gauged.

3. Means, as claimed in claim 1, characterized by comprising at least a pen (9) which is provided with a bottom ball valve 9', normally closed, to keep ink (60) within the pen, so that when placing the pen with its bottom on screen (30) of ink supplying roller (3) the valve opens and the pen border adheres to the screen substantially providing a doctor able to distribute substantially on a band having the same width as the pen diameter, when the same is moved along the screen annexed to the pen (9) there is a wheel (90) with a circular calibrated circumference (90') engaging a meter (91) wherein from the ratio between ink (60) consumed from the pen and the length realized results the capacity of releasing ink of the cells of screen (30).

## Patentansprüche

1. Mittel zur direkten und wirksam Bestimmung des Relativfaktors von der Freilassung der Druckfarbe der Auftragrollen, besonders für den Flexodruck, worin durch eine erste Vorrichtung ein Teil (3') des Rasters (3) des Auftragrolles (30) mit Druckfarbe (60) gespeist wird, indem die überflüssige Druckfarbe (60) durch ein Streichmesser oder durch einen Rackel (6) geschabt wird, während eine andere reihenweise montierte Vorrichtung (7) die übertragene Druckfarbe (60) auf ein Blatt oder auf einen ähnlichen Halter (70) bekommt, beim Messen, der tatsächlich erzeugten bedruckten Fläche, die Menge wirklich durch diese Auftragrolle freigelassenen und lösbaren Druckfarbe (60) oder wenigstens durch diese Teile (3') der selben Walze, wobei in wesentlichen die selbe von einer Druckmaschine ausgeführte Aufgabe wiederholt wird.

2. Mittel, nach Anspruch 1, dadurch gekennzeichnet, daß sie aus einer Unterlage (8) und zwei zwei Paar (80' und 80'') Platten auf parallelen Achsen tragenden End-Stützen (8' und 8'') bestehen, wobei die vordere (80'') durch ein Treibriernen (81) geführt wird, das seinerseits durch einen Elektromotor (82) gesteuert wird, worin die obengenannte zwei Paar Platten (80' und 80'') eine Art von Lücke bilden um die Wellen (30' und 30'') der Auftragrolle (30) aufzunehmen, nämlich auf der obenerwähnten Unterlagen (8) zu bekommen, auf ein Paar Halter (83' und 83'') wird ein Paar Führungen (84',84'') montiert, die eine (84'') der zwei Gewinden aufweist und durch einen Motor (85) angesteuert wird ; auf parallelen Führungen (84', 84'') wird die Einheit (86) angebracht, die die erste Vorrichtung trägt, wobei die Einheit (86) einen Arm (86') enthält, um eine Schraubenmutter einzugreifen und loszumachen oder in sich selbst ein Schraubenmutter enthalten; diese arbeitet mit einem Anschlag (86''), der so gestellt werden kann; stromabwärts der Länge der Auftragrolle (30), deren Zellenkapazität ausgemessen werden muß, und stromaufwärts der Länge der Farbwalze(30), deren Druckfarbe-Freilassungsfähigkeit ausgemessen werden muß.

3. Mittel, nach Anspruch 1, dadurch gekennzeichnet, daß sie wenigstens eine Feder (9) enthalten, die mit einem unteren Kugel-Ventil 9' versehen ist, das normalerweise gesperrt ist, um die Druckfarbe (60) innerhalb der Feder zu halten; also wenn die Feder mit ihrem Ende auf dem Raster (30) der Auftragrolle (3) gestellt wird, öffnet sich das Ventil und das Ende der Feder haftet an dem Raster indem es wesentlich eine Rackel schafft die wesentlich die Druckfarbe auf ein Band verteilen kann, das in wesentlichen dieselbe Breite wie das Durchmesser der Feder hat, wenn dieselbe Feder entlang den Raster vorgerückt wird; angeschlossen an die Feder (9) gibt es ein Rad (90) mit einer runden kalibrierte Kreislinie (90'), die ein Meßinstrument (91) in Gang setzt; das Verhältnis zwischen der von der Feder freigelassenen Druckfarbe (60) und der erzeugten Länge gibt die Druckfarbe-Freilassungskapazität der Zellen des Rasters (30) an.

## Revendications

1. Moyens de détermination directe et effective du facteur relatif de relâchement de l'encre des rouleaux encreurs, particulièrement indiqués pour l'impression flexographique, où grâce à un premier dispositif une portion (3') de la trame (3) du rouleau encreur (30) est alimentée par l'encre (60) en déplaçant ledit encre (60) excédent par une racle ou spatule (6), tandis que un autre dispositif (7), monté, disons, en série, reçoit l'encre (60) déplacé, sur une feuille ou sur un support similaire (70); l'étendue de la superficie imprimée effectivement pourvue, de la quantité d'encre (60), réellement relâchée et relâchable par ce rouleau encreur (3) ou au moins par ces portions (3') du rouleau, en répétant essentiellement le même devoir accompli par une machine à imprimer.

2. Moyens, selon la revendication 1, caractérisés en ce qu'ils comprennent: une base (8), deux tréteaux (8' et 8'') d'extrémité, qui soutiennent deux couples (80' et 80'') de disques, sur des axes parallèles, la couple antérieure (80') étant conduite par une courroie (81), qui, à son tour, est actionnée par un moteur (82) électrique, où les susdites couples de disques (80' et 80''), forment une sorte de creux, pour recevoir les pivots (30' et 30'') du rouleau encreur (30); exactement sur dite base (8), sur une couple de supports (83' et 83''), est monté une couple de guides (84', 84'') parallèles, l'une desquelles (84'') est fileté et conduite par un moteur (85); sur dites guides (84', 84'') parallèles est monté l'unité (86), qui supporte le premier dispositif, où la susdite unité (86) comprend un bras (86') pour enclencher et dégager un écrou, ou comprenant lui même un écrou, qui travaille avec un arrêt (86''), qui peut être placé: au début de la longueur du rouleau (30) duquel on veut déterminer la capacité des cellules, et à la fin de la longueur du rouleau encreur (30) duquel on veut déterminer la capacité de relâchement de l'encre.

3. Moyens, selon la revendication 1, caractérisés en ce qu'ils comprennent au moins un stylo (9) pourvu, dans son bout inférieur, d'une soupape (9') à sphère, normalement fermée, de façon a retenir (60) à l'intérieur du stylo, partant quand on place le fond du stylo sur la trame (30) du rouleau (3) encreur la soupape s'ouvre et le borde du stylo adhère à la trame, fournissant essentiellement une racle capable de distribuer l'encre sur une bande qui a essentiellement la même largeur du diamètre du stylo, quand le même est déplacé le long de la trame annexe au stylo (9) il y a une roue (90) avec un profile (90') circulaire calibré, qui engage un mesureur (91); du rapport entre l'encre (60) relâche par le stylo et la longueur produite, indique la capacité de relâchement d'encre des cellules de la trame (30).
